# EUROPÄISCHE PATENTANMELDUNG

(11) **EP 4 011 256 A1**
(43) Veröffentlichungstag der Anmeldung: **15.06.2022**
(21) Anmeldenummer: 20213694.1
(22) Anmeldetag: 14.12.2020
(51) Int. Cl.: A47J 43/046, A47J 43/07

(54) **VERFAHREN ZUR REINIGUNG EINER ELEKTROMOTORISCH BETRIEBENEN KÜCHENMASCHINE**

(71) Anmelder: Henkel AG & Co. KGaA, 40589 Düsseldorf (DE)
(72) Erfinder: Gebert-Schwarzwaelder, Antje, 41469 Neuss (DE); Jansen, Arne, 42781 Haan (DE); Scheidgen, Arndt, 45134 Essen (DE)

(57) **Zusammenfassung**

Die vorliegende Erfindung betrifft ein Verfahren zur Reinigung einer elektromotorisch betriebenen Küchenmaschine, welche eine Rührschüssel und ein Rührwerk aufweist.

## Beschreibung

Die vorliegende Erfindung betrifft ein Verfahren zur Reinigung einer elektromotorisch betriebenen Küchenmaschine, welche eine Rührschüssel und ein Rührwerk aufweist.

Elektromotorisch betriebene Küchenmaschinen dienen insbesondere zur Vorbereitung oder Zubereitung von Speisen. Hierfür werden die Lebensmittel in die entsprechende Rührschüssel gegeben. Mit Hilfe eines Rührwerkes werden die Lebensmittel vermengt und, je nach Ausgestaltung des Rührwerks, zerkleinert. Auch das Garen ist bei vielen solcher Küchenmaschinen vorgesehen. Hierfür sind die Maschinen mit einer Heizfunktion ausgestattet, die es ermöglicht die Rührschüssel zu erwärmen.

Das Rührwerk befindet sich dabei im Inneren der Rührschüssel. Es ist üblicherweise im Bereich des Bodens der Rührschüssel angebracht. Es ist jedoch auch möglich, dass das Rührwerk über die obere Öffnung in das Innere der Rührschüssel eingeführt und so auch wieder entfernt werden kann.

Ungeachtet der genauen Ausgestaltung des Rührwerkes verbleiben auch nach Entleerung der Rührschüssel Lebensmittelreste im Inneren der Rührschüssel und/oder am Rührwerk. Eine Reinigung der Rührschüssel sowie gegebenenfalls des Rührwerkes ist daher notwendig, bevor ein neues Lebensmittel zubereitet wird.

Für eine elektromotorisch betriebene Küchenmaschine beschreibt EP 3578089 A1 eine Reinigungseinrichtung. Hierbei handelt es sich um eine Vorrichtung, welche im Inneren der Rührschüssel angebracht ist und dort rotiert. Hierdurch wird eine mechanische Reinigung im Inneren der Rührschüssel erreicht. Das Rührwerk wird hierdurch jedoch nicht gereinigt. Zudem muss die Vorrichtung nach der Zubereitung der Speisen eingebaut und anschließend wieder entfernt werden. Es muss für jede Rührschüssel individuell angepasst werden und je nach Art der Zubereiteten Speisen, beispielsweise Reis, muss auch die Vorrichtung gründlich gereinigt werden.

Ein Verfahren zur Reinigung einer Rührschüssel einer elektromotorisch betriebenen Küchenmaschine ist auch in DE 102009030132 B4 beschrieben. Das dort beschriebene Verfahren kommt eine besondere Reinigungseinrichtung aus. Die Reinigung erfolgt dadurch, dass das Rührwerk eine im Inneren der Rührschüssel befindliche Reinigungsflüssigkeit rotiert, wobei eine programmgesteuerte, mehrmalige Richtungsumkehr des Rührwerks vorgenommen wird.

Eine solche Reinigung unter Richtungsänderung des Rührwerks erfordert eine derartige technische Ausgestaltung, dass der Richtungswechsel des Rührwerks überhaupt möglich ist. Es existieren jedoch auch elektromotorisch betriebene Küchenmaschinen, bei denen ein solcher Richtungswechsel des Rührwerks nicht vorgesehen ist. Auch für solche elektromotorisch betriebenen Küchenmaschinen besteht jedoch Bedarf an einem Verfahren zur Reinigung, welches direkt in der Küchenmaschine durchgeführt werden kann, ohne dass Rührschüssel und/oder Rührwerk von der Maschine entfernt werden müssen. Dabei sollen sowohl die Rührschüssel als auch das Rührwerk gereinigt werden. Insbesondere bei solchen Maschinen, bei welchen sich das Rührwerk im Bereich des Bodens der Rührschüssel befindet, soll auch der Bereich unterhalb des Rührwerks gründlich gereinigt werden.

Überraschenderweise hat sich gezeigt, dass durch eine angepasste Rührgeschwindigkeit sowie eine angepasste Heizrate eine Reinigung einer Rührschüssel sowie eines Rührwerks einer elektromotorisch betriebenen Küchenmaschine möglich ist, ohne dass ein Wechsel des Rührwerks notwendig ist oder dass weitere Vorrichtungen im Inneren der Rührschüssel benötigt werden.

In einer ersten Ausführungsform wird daher die der vorliegenden Erfindung zugrunde liegenden Aufgabe gelöst durch ein Verfahren zur Reinigung einer elektromotorisch betriebenen Küchenmaschine, welche eine Rührschüssel und ein Rührwerk im Inneren der Schüssel aufweist, dadurch gekennzeichnet, dass man die Rührschüssel mit einer Reinigungsflüssigkeit füllt, anschließend das Rührwerk sowie die Heizfunktion betätigt, wobei die Rührgeschwindigkeit des Rührwerks im Bereich von 50 U/min bis 11000 U/min (Umdrehungen pro Minute) liegt und mittels der Heizfunktion ein Energieeintrag von 100 W·h bis 400 W·h (Watt·Stunde) erfolgt.

Diese und weitere Aspekte, Merkmale und Vorteile der Erfindung werden für den Fachmann aus dem Studium der folgenden detaillierten Beschreibung und Ansprüche ersichtlich. Dabei kann jedes Merkmal aus einem Aspekt der Erfindung in jedem anderen Aspekt der Erfindung eingesetzt werden. Ferner ist es selbstverständlich, dass die hierin enthaltenen Beispiele die Erfindung beschreiben und veranschaulichen sollen, diese aber nicht einschränken und insbesondere die Erfindung nicht auf diese Beispiele beschränkt ist. Numerische Bereiche, die in dem Format "von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Das erfindungsgemäße Verfahren ermöglicht eine optimale Reinigung einer elektromotorisch betriebenen Küchenmaschine mit Kochfunktion, so dass durch eine definierte Aufheizrate und klar vorgegebene Drehgeschwindigkeiten des Rührwerks eine gegenüber dem Stand der Technik beschrieben verbesserte Reinigung des Schüsselbodens, der Wände der Schüssel und des Rührwerks erreicht wird. Überraschenderweise hat sich gezeigt, dass sich durch das erfindungsgemäße Verfahren auch komplexere Verschmutzungen, die üblicherweise nur schwierig zu entfernen sind, entfernt werden können. Beispielsweise bei der Zubereitung von Risotto verbleiben nach der üblichen Reinigung beispielsweise in einer Geschirrspülmaschine Stärkereste im Inneren der Rührschüssel. Der Reis muss zudem zuvor manuell möglichst gründlich entfernt werden, so dass das Rührwerk möglichst frei von Reiskörnern ist.

Überraschenderweise hat sich gezeigt, dass es mit dem erfindungsgemäßen Verfahren möglich ist, auch Anschmutzungen, die ansonsten nur schwer zu entfernen sind entfernt werden können. Beispielhaft sind Verschmutzungen zu nennen, die bei der Zubereitung von Babybrei, Marmelade oder Risotto auftreten, wobei das Verfahren nicht auf diese Verunreinigungen beschränkt ist.

Zu Durchführung des erfindungsgemäßen Verfahrens wird in die Rührschüssel zunächst eine Reinigungsflüssigkeit gegeben. Hierbei kann es sich um eine wässrige, tensidhaltige Lösung handeln. Hierfür kann beispielsweise ein handelsübliches flüssiges Handgeschirrspülmittel in üblicher Konzentration in die Schüssel gegeben und mit Wasser verdünnt werden. Es können auch Reinigungsmittel, wie sie für eine Geschirrspülmaschine verwendet werden, genutzt werden. Die verwendeten Reinigungsmittel können fest oder flüssig sein. Sie sollten jedoch nicht in komprimierter Form als Tabs vorliegen, da sich diese nur schwer in Wasser auflösen. Wird das Rührwerk eingeschaltet, kann es zu Beschädigungen am Rührwerk kommen, wenn der Tab noch nicht im Wesentlichen im Wasser aufgelöst ist.

Bevorzugt dabei einzusetzende Reinigungsmittel sind solche Mittel, die mindestens eine Amylase und mindestens eine Protease aufweisen, wobei das Gewichtsverhältnis von Amylase zu Protease 1:10 bis 5:1 beträgt.

In einer weiteren Ausführungsform betrifft die vorliegende Erfindung ein Verfahren, wie vorstehend beschrieben, bei dem Reinigungsmittel eingesetzt werden, die mindestens eine Amylase und mindestens eine Protease aufweist, wobei 0,05 bis 1,0 Gew.-%, bevorzugt 0,1 bis 0,6 Gew.-%, insbesondere 0,12 bis 0,4 Gew.-% aktives Enzymprotein der Amylase (bezogen auf die Menge der Gesamtzusammensetzung) enthalten.

"Mindestens ein", wie hierin verwendet, schließt ein, ist aber nicht begrenzt auf, 1, 2, 3, 4, 5, 6 und mehr. Bezogen auf einen Inhaltsstoff bezieht sich die Angabe auf die Art des Inhaltsstoffs und nicht auf die absolute Zahl der Moleküle. "Mindestens ein Tensid" bedeutet somit beispielsweise mindestens eine Art von Tensid, d.h. dass eine Art von Tensid oder eine Mischung mehrerer verschiedener Tenside gemeint sein kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Die in dieser Anmeldung genannten Angaben in Gew.-% beziehen sich, soweit nichts anderes erwähnt, auf den Aktivstoffgehalt in g bezogen auf das Gewicht der gesamten Zusammensetzung in g.

Da die im Verfahren eingesetzten Mittel vorzugsweise fest sind, bezieht sich der angegebene pH-Wert in verschiedenen Ausführungsformen auf eine 10% Lösung der jeweiligen Zusammensetzung in destilliertem Wasser bei 25 °C.

"Phosphatfrei" und "phosphonatfrei", wie hierin verwendet, bedeutet, dass die betreffende Zusammensetzung im Wesentlichen frei von Phosphaten bzw. Phosphonaten ist, d.h. insbesondere Phosphate bzw. Phosphonate in Mengen kleiner als 0,1 Gew.-%, vorzugsweise kleiner als 0,01 Gew.-%, bezogen auf die jeweilige Zusammensetzung, enthält.

Die Anwesenheit von Enzymen in Geschirr-Reinigungsmitteln ist hinlänglich bekannt. Üblicherweise werden Proteasen in Reinigungsmitteln eingesetzt, um Eiweiß-haltige Verschmutzungen, beispielsweise hervorgerufen durch Fleisch oder Eier, von Porzellan und Gläsern zu entfernen. Auch wenn Reinigungsmittel für Geschirrspülmaschinen sowohl Amylasen als auch Proteasen in einem Reinigungsmittel enthalten sind, ergeben sich trotzdem Probleme bei der Ablösung von stärkehaltigen Anschmutzungen von Edelstahl.

Überraschenderweise hat sich gezeigt, dass wenn dabei der Anteil an Amylasen gegenüber dem Anteil der Proteasen deutlich angehoben wird, nicht nur Eiweiß-haltige Verschmutzungen sondern auch Stärke-Anschmutzungen von harten Oberflächen und insbesondere von Edelstahl entfernt werden können. Dabei ist nicht nur die Reinigungsleistung an sich sehr gut, sondern auch die Dauer, die zur Reinigung benötigt wird. Die Reinigung erfolgt innerhalb weniger Minuten.

In einer bevorzugten Ausführungsform betrifft die vorliegende Erfindung ein Verfahren, bei dem das Reinigungsmittel mindestens eine Amylase und mindestens eine Protease aufweist, wobei das Gewichtsverhältnis von Amylase zu Protease 1:10 bis 5:1 beträgt.

Das Gewichtsverhältnis von Amylase zu Protease beträgt bevorzugt (jeweils bezogen auf die Menge des aktiven Enzymproteins) 1:7 bis 2:1, bevorzugt 1:5 bis 1:1,5, insbesondere 1:3 bis 1:1.

Gemäß einer bevorzugten Ausführungsform betrifft die vorliegende Erfindung ein Verfahren, bei dem ein Reinigungsmittel eingesetzt wird, das mindestens eine Amylase und mindestens eine Protease aufweist, wobei 0,05 bis 1,0 Gew.-%, bevorzugt 0,1 bis 0,6 Gew.-%, insbesondere 0,12 bis 0,4 Gew.-% aktives Enzymprotein der Amylase (bezogen auf die Menge der Gesamtzusammensetzung) eingesetzt werden und wobei das Gewichtsverhältnis von Amylase zu Protease (jeweils bezogen auf die Menge des aktiven Enzymproteins) 1:10 bis 5:1, 1:7 bis 2:1, bevorzugt 1:5 bis 1:1,5, insbesondere 1:3 bis 1:1 beträgt.

Beispiele für erfindungsgemäß einsetzbare Amylasen sind die α-Amylasen aus Bacillus licheniformis, aus B. amyloliquefaciens, aus B. stearothermophilus, aus Aspergillus niger und A. oryzae sowie die für den Einsatz in Geschirrspülmitteln verbesserten Weiterentwicklungen der vorgenannten Amylasen. Bevorzugt geeignet sind Amylasen, die eine gesteigerte Stabilität gegenüber Bleiche aufweisen, insbesondere bevorzugt sind beispielsweise Excellenz^{™} S1000, Excellenz^{™} S3300 (Dupont) sowie Stainzyme^{™} Plus, insbesondere Stainzyme^{™}Plus 12 T bzw. Stainzyme^{™}Plus 24 T, von Novozymes, insbesondere bevorzugt ist der Einsatz von Excellenz^{™} S3300 bzw. Stainzyme Plus.

Beispiele für Amylasen sind die α-Amylasen aus Bacillus licheniformis, Bacillus amyloliquefaciens oder Bacillus stearothermophilus sowie insbesondere auch deren für den Einsatz in Wasch- oder Reinigungsmitteln verbesserte Weiterentwicklungen. Das Enzym aus Bacillus licheniformis ist von dem Unternehmen Novozymes unter dem Namen Termamyl^{®} und von dem Unternehmen Danisco/DuPont unter dem Namen Purastar^{®} ST erhältlich. Weiterentwicklungsprodukte dieser α-Amylase sind unter den Handelsnamen Duramyl^{®} und Termamyl^{®} ultra (beide von Novozymes), Purastar^{®} OxAm (Danisco/DuPont) und Keistase^{®} (Daiwa Seiko Inc.) erhältlich. Die α-Amylase von Bacillus amyloliquefaciens wird von dem Unternehmen Novozymes unter dem Namen BAN^{®} vertrieben, und abgeleitete Varianten von der α-Amylaseaus Bacillus stearothermophilus unter den Namen BSG^{®} und Novamyl^{®}, ebenfalls von dem Unternehmen Novozymes. Des Weiteren sind für diesen Zweck die α-Amylase aus Bacillus sp. A 7-7 (DSM 12368) und die Cyclodextrin-Glucanotransferase (CGTase) aus Bacillus agaradherens (DSM 9948) hervorzuheben. Ferner sind die amylolytischen Enzyme einsetzbar, die in den internationalen Patentanmeldungen WO 95/26397 A1, WO 96/23873 A1, WO 99/23211 A1, WO 00/60060 A2, WO 03/002711 A2, WO 03/054177 A2, WO 2006/002643 A2, WO 2007/079938 A2, WO 2011/100410 A2 und WO 2013/003659 A1 offenbart sind. Ebenso sind Fusionsprodukte aller genannten Moleküle einsetzbar. Darüber hinaus sind die unter den Handelsnamen Fungamyl^{®} von dem Unternehmen Novozymes erhältlichen Weiterentwicklungen der α-Amylase aus Aspergillus niger und A. oryzae geeignet. Weitere vorteilhaft einsetzbare Handelsprodukte sind z.B. die Amylase-LT^{®} und Stainzyme^{®} oder Stainzyme^{®} ultra bzw. Stainzyme^{®} plus sowie AmplifyTM 12L oder Amplify PrimeTM 100L, letztere ebenfalls von dem Unternehmen Novozymes, sowie die PREFERENZ S^{®} Serie von dem Unternehmen Danisco/DuPont, umfassend z.B. PREFERENZ S100^{®}, PREFERENZ S1000^{®} oder PREFERENZ S210^{®}. Auch durch Punktmutationen erhältliche Varianten dieser Enzyme können erfindungsgemäß eingesetzt werden.

Beispiele für erfindungsgemäß einsetzbare Proteasen sind insbesondere Proteasen vom Subtilisin-Typ (Subtilasen, Subtilopeptidasen, EC 3.4.21.62), welche aufgrund der katalytisch wirksamen Aminosäuren Serin-Proteasen sind. Sie wirken als unspezifische Endopeptidasen und hydrolysieren beliebige Säureamidbindungen, die im Inneren von Peptiden oder Proteinen liegen. Ihr pH-Optimum liegt meist im deutlich alkalischen Bereich. Einen Überblick über diese Familie bietet beispielsweise der Artikel "Subtilases: Subtilisin-like Proteases" von R. Siezen, Seite 75-95 in "Subtilisin enzymes ", herausgegeben von R. Bott und C. Betzel, New York, 1996. Subtilasen werden natürlicherweise von Mikroorganismen gebildet. Hierunter sind insbesondere die von Bacillus-Spezies gebildeten und sezernierten Subtilisine als bedeutendste Gruppe innerhalb der Subtilasen zu erwähnen sowie die aus dem Stand der Technik bekannten optimierten Varianten davon.

Beispiele für Proteasen sind die Subtilisine BPN' aus Bacillus amyloliquefaciens und Carlsberg aus Bacillus licheniformis, die Protease PB92, die Subtilisine 147 und 309, die Protease aus Bacillus lentus, Subtilisin DY und die den Subtilasen, nicht mehr jedoch den Subtilisinen im engeren Sinne zuzuordnenden Enzyme Thermitase, Proteinase K und die Proteasen TW3 und TW7. Subtilisin Carlsberg ist in weiterentwickelter Form unter dem Handelsnamen Alcalase^{®} von dem Unternehmen Novozymes erhältlich. Die Subtilisine 147 und 309 werden unter den Handelsnamen Esperase^{®} bzw. Savinase^{®} von dem Unternehmen Novozymes vertrieben. Von der Protease aus Bacillus lentus DSM 5483 leiten sich Proteasevarianten ab. Weitere brauchbare Proteasen sind z.B. die unter den Handelsnamen Durazym^{®}, Relase^{®}, Everlase^{®}, Nafizym^{®}, Natalase^{®}, Kannase^{®}, Progress Uno 101L^{®} und Ovozyme^{®} von dem Unternehmen Novozymes, die unter den Handelsnamen, Purafect^{®}, Purafect^{®} OxP, Purafect^{®} Prime, Excellase^{®}, Properase^{®}, Preferenz P100^{®} und Preferenz P300^{®} von dem Unternehmen Danisco/DuPont, das unter dem Handelsnamen Lavergy pro 104 LS^{®} von dem Unternehmen BASF, das unter dem Handelsnamen Protosol^{®} von dem Unternehmen Advanced Biochemicals Ltd., das unter dem Handelsnamen Wuxi^{®} von dem Unternehmen Wuxi Snyder Bioproducts Ltd., die unter den Handelsnamen Proleather^{®} und Protease P^{®} von dem Unternehmen Amano Pharmaceuticals Ltd., und das unter der Bezeichnung Proteinase K-16 von dem Unternehmen Kao Corp. erhältlichen Enzyme. Besonders bevorzugt eingesetzt werden auch die Proteasen aus Bacillus gibsonii und Bacillus pumilus, die offenbart sind in den internationalen Patentanmeldungen WO 2008/086916 A1 und WO 2007/131656 A1. Weitere vorteilhaft einsetzbare Proteasen sind offenbart in den Patentanmeldungen WO 91/02792 A1, WO 2008/007319 A2, WO 93/18140 A1, WO 01/44452 A1, GB 1243784 A, WO 96/34946 A1, WO 02/029024 A1 und WO 03/057246 A1. Weitere verwendbare Proteasen sind diejenigen, die in den Mikroorganismen Stenotrophomonas maltophilia, insbesondere Stenotrophomonas maltophilia K279a, Bacillus intermedius sowie Bacillus sphaericus natürlicherweise vorhanden sind.

Besonders bevorzugt einzusetzende Protease sind beispielsweise die in der WO 2017/215925 A1 offenbarten Proteasen, sowie Excellenz^{™} P1000 (Dupont), Ovozymes^{™} und/oder Blaze^{™}, insbesondere Blaze Evity 125 T und 150 T, (Novozymes).

Außer den hier beschriebenen beispielhaften Amylasen und Proteasen können auch weitere Amylasen und/oder Proteasen verwendet werden.

Das Reinigungsmittel liegt vorzugsweise portioniert vor. Dabei ist eine Portionsgröße an die Größe der zu reinigenden Rührschüssel angepasst.

Übliche Größen für Rührschüsseln von elektromotorisch betriebenen Küchenmaschinen umfassen ein Volumen von etwa 1 I bis 3 I. Das Reinigungsmittel ist vorzugsweise derart bereitgestellt, dass Portionsgrößen von 5-15 g, insbesondere von 7-12 g vorliegen. Dies kann beispielsweise dadurch erfolgen, dass geeignete Behältnisse, beispielsweise Pouches, zur Verfügung gestellt werden, die mit dem erfindungsgemäßen Reinigungsmittel gefüllt sind.

Die Portionierung sorgt dafür, dass das Gewichtsverhältnis von Amylase zu Protease bei jeder Anwendung sichergestellt ist. Auch die in der Reinigungsflotte, die sich dadurch ausbildet, dass das Reinigungsmittel in Wasser gelöst wird, ist die Konzentration an Amylase und Protease mit einer Reinigungsmittelportion sichergestellt, so dass eine gute Reinigungsleistung erfolgen kann.

Gemäß einer weiteren bevorzugten Ausführungsform beträgt die Menge aller Amylasen, bezogen auf die Menge an aktivem Enzymprotein, in der Reinigungsflotte von 1 bis 100 mg, bevorzugt 5 bis 50, insbesondere 8 bis 25 mg der Amylase.

Gemäß einer weiteren bevorzugten Ausführungsform beträgt die Menge aller Proteasen, bezogen auf die Menge an aktivem Enzymprotein, in der Reinigungsflotte 5 bis 800,0 mg, bevorzugt 10 bis 200 mg, insbesondere 15 bis 100 mg.

Bei diesen Mengenbereichen kann eine gute Reinigung in der gewünschten Zeit, nämlich innerhalb von 10 Minuten oder weniger, insbesondere von 7 Minuten oder weniger sichergestellt werden.

Das im erfindungsgemäßen Verfahren eingesetzten Reinigungsmittel ist vorzugsweise alkalisch. Der pH-Wert einer 10%-igen Lösung des Reinigungsmittels in destilliertem Wasser liegt bei 25 °C vorzugsweise im Bereich von 8,5-12, insbesondere von 9,5-11. Bei diesem pH-Wertbereich können die Enzyme stabil gelagert werden, ohne dass es zu einer Abschwächung der Wirkung kommt. Zudem ist auch hier eine gute Reinigung möglich, wobei die Edelstahlrührschüssel nicht beispielsweise korrosiv angegriffen wird.

Neben den Amylasen und Proteasen in den genannten Gewichtsverhältnissen kann das im erfindungsgemäßen Verfahren eingesetzten Reinigungsmittel weiterhin ein oder mehrere für Reinigungsmittel übliche Bestandteile ausgewählt aus Tensiden, Enzymstabilisatoren, Lösungsmitteln, Salzen, Gerüststoffen (Buildern), pH-Stabilisatoren, Korrosionshemmern, Verdickern, Schauminhibitoren, Farbstoffen, Duftstoffen, Polymeren und Parfumträgern, enthalten.

Diese im erfindungsgemäßen Verfahren eingesetzten Reinigungsmittel ermöglichen damit ein Verfahren zur Reinigung von Edelstahloberflächen innerhalb von kürzester Zeit bei angemessenen Temperaturen. Eine mechanische Reinigung wie beispielsweise mit einem Schwamm oder einer Bürste ist nicht notwendig. Dennoch erhält man eine saubere Oberfläche.

Aufgrund der bevorzugten Temperatur ist die Oberfläche, also die Rührschüssel, dann auch nicht so warm, als dass man sie nicht mehr anfassen könnte. Eine weitere Benutzung unmittelbar nach der Reinigung und einem anschließenden Ausspülen ist daher möglich.

Vorzugsweise ist das Reinigungsmittel portioniert, wobei die Umhüllung, also das wasserlösliche Behältnis, bevorzugt derart gewählt ist, dass es sich innerhalb eines Zeitraums von 10 Sekunden in Wasser auflöst. Auflösen bedeutet dabei, dass das im Inneren befindliche Reinigungsmittel vollständig aus dem wasserlöslichen oder wasserdispergierbaren Behältnis austreten kann und damit seine Reinigungswirkung entfalten kann.

Gemäß einer weiteren besonders bevorzugten Ausführungsform handelt es sich bei dem Reinigungsmittel, bevorzugt Geschirrspülmittel, insbesondere maschinellem Geschirrspülmittel um eine Reinigungsmittelportion in einer wasserlöslichen Umhüllung mit einer oder ggf. auch mehreren Kammern/Kompartimenten. Dabei ist das Reinigungsmittel bevorzugt als Reinigungsmitteleinmalportion konfektioniert, so dass es zur Durchführung eines Reinigungsdurchlaufs eingesetzt wird und dabei (weitestgehend) im wesentlichen verbraucht wird.

Die wasserlösliche Umhüllung wird vorzugsweise aus einem wasserlöslichen Folienmaterial, welches ausgewählt ist aus der Gruppe, bestehend aus Polymeren oder Polymergemischen, gebildet. Die Umhüllung kann aus einer oder aus zwei oder mehr Lagen aus dem wasserlöslichen Folienmaterial gebildet werden. Das wasserlösliche Folienmaterial der ersten Lage und der weiteren Lagen, falls vorhanden, kann gleich oder unterschiedlich sein.

Es ist bevorzugt, dass die wasserlösliche Umhüllung Polyvinylalkohol oder ein Polyvinylalkoholcopolymer enthält. Wasserlösliche Umhüllungen, die Polyvinylalkohol oder ein Polyvinylalkoholcopolymer enthalten, weisen eine gute Stabilität bei einer ausreichend hohen Wasserlöslichkeit, insbesondere Kaltwasserlöslichkeit, auf.

Geeignete wasserlösliche Folien zur Herstellung der wasserlöslichen Umhüllung basieren bevorzugt auf einem Polyvinylalkohol oder einem Polyvinylalkoholcopolymer, dessen Molekulargewicht im Bereich von 10.000 bis 1.000.000 gmol⁻¹, vorzugsweise von 20.000 bis 500.000 gmol⁻¹, besonders bevorzugt von 30.000 bis 100.000 gmol⁻¹ und insbesondere von 40.000 bis 80.000 gmol⁻¹ liegt.

Die Herstellung von Polyvinylalkohol geschieht üblicherweise durch Hydrolyse von Polyvinylacetat, da der direkte Syntheseweg nicht möglich ist. Ähnliches gilt für Polyvinylalkoholcopolymere, die aus entsprechend aus Polyvinylacetatcopolymeren hergestellt werden. Bevorzugt ist, wenn wenigstens eine Lage der wasserlöslichen Umhüllung einen Polyvinylalkohol umfasst, dessen Hydrolysegrad 70 bis 100 Mol-%, vorzugsweise 80 bis 90 Mol-%, besonders bevorzugt 81 bis 89 Mol-% und insbesondere 82 bis 88 Mol-% ausmacht.

In einer bevorzugten Ausführungsform besteht die wasserlösliche Verpackung zu mindestens 20 Gew.-%, besonders bevorzugt zu mindestens 40 Gew.-%, ganz besonders bevorzugt zu mindestens 60 Gew.-% und insbesondere zu mindestens 80 Gew.-% aus einem Polyvinylalkohol, dessen Hydrolysegrad 70 bis 100 Mol-%, vorzugsweise 80 bis 90 Mol-%, besonders bevorzugt 81 bis 89 Mol-% und insbesondere 82 bis 88 Mol-%, beträgt.

Einem zur Herstellung der wasserlöslichen Umhüllung geeignetem Polyvinylalkohol-enthaltendem Folienmaterial kann zusätzlich ein Polymer ausgewählt aus der Gruppe umfassend (Meth)Acrylsäure-haltige (Co)Polymere, Polyacrylamide, Oxazolin-Polymere, Polystyrolsulfonate, Polyurethane, Polyester, Polyether, Polymilchsäure oder Mischungen der vorstehenden Polymere zugesetzt sein. Ein bevorzugtes zusätzliches Polymer sind Polymilchsäuren.

Bevorzugte Polyvinylalkoholcopolymere umfassen neben Vinylalkohol Dicarbonsäuren als weitere Monomere. Geeignete Dicarbonsäure sind Itaconsäure, Malonsäure, Bernsteinsäure und Mischungen daraus, wobei Itaconsäure bevorzugt ist. Ebenfalls bevorzugte Polyvinylalkoholcopolymere umfassen neben Vinylalkohol eine ethylenisch ungesättige Carbonsäure, deren Salz oder deren Ester. Besonders bevorzugt enthalten solche Polyvinylalkoholcopolymere neben Vinylalkohol Acrylsäure, Methacrylsäure, Acrylsäureester, Methacrylsäureester oder Mischungen daraus.

Es kann bevorzugt sein, dass das Folienmaterial weitere Zusatzstoffe enthält. Das Folienmaterial kann beispielsweise Weichmacher wie Dipropylenglycol, Ethylenglycol, Diethylenglycol, Propylenglycol, Glyzerin, Sorbitol, Mannitol oder Mischungen daraus enthalten. Weitere Zusatzstoffe umfassen beispielsweise Freisetzungshilfen, Füllmittel, Vernetzungsmittel, Tenside, Antioxidationsmittel, UV-Absorber, Antiblockmittel, Antiklebemittel oder Mischungen daraus.

Geeignete wasserlösliche Folien zum Einsatz in den wasserlöslichen Umhüllungen der wasserlöslichen Verpackungen gemäß der Erfindung sind Folien, die von der Firma MonoSol LLC beispielsweise unter der Bezeichnung M8720, M8630, M8312, M8440, M7062, C8400 oder M8900 vertrieben werden. Weiter geeignet sind Folien, welche unter der Bezeichnung SH2601, SH2504, SH2707 oder SH2701 von Nippon Gohsei vertrieben werden. Andere geeignete Folien umfassen Folien mit der Bezeichnung Solublon^{®} PT, Solublon^{®} GA, Solublon^{®} KC oder Solublon^{®} KL von der Aicello Chemical Europe GmbH oder die Folien VF-HP von Kuraray.

Die wasserlösliche Umhüllung weist bevorzugt zumindest teilweise einen Bitterstoff mit einem Bitterwert zwischen 1.000 und 200.000, insbesondere solche ausgewählt aus Chininsulfat (Bitterwert = 10.000), Naringin (Bitterwert = 10.000), Saccharoseoctaacetat (Bitterwert = 100.000), Chininhydrochlorid und Mischungen daraus auf. Insbesondere ist die äußere Oberfläche der wasserlöslichen Umhüllung zumindest teilweise mit einem Bitterstoff mit einem Bitterwert zwischen 1.000 und 200.000 beschichtet. In diesem Zusammenhang ist es insbesondere zu bevorzugen, dass die wasserlösliche Umhüllung zu mindestens 50 %, vorzugsweise zu mindestens 75 % und ganz besonders bevorzugt mindestens 90 % mit dem Bitterstoff mit einem Bitterwert zwischen 1.000 und 200.000 beschichtet ist. Das Aufbringen des Bitterstoffs mit einem Bitterwert zwischen 1.000 und 200.000 kann beispielsweise mittels Bedruckung, Besprühens oder Bestreichung erfolgen.

Weist das im erfindungsgemäßen Verfahren eingesetzten Reinigungsmittel bevorzugt mindestens ein Tensid auf, so kann es ein oder mehrere anionische Tenside, kationische Tenside, nichtionische Tenside oder amphotere Tenside aufweisen.

Vorzugsweise enthält das im erfindungsgemäßen Verfahren eingesetzten Reinigungsmittel mindestens ein nichtionisches Tensid. Es ist bevorzugt, dass eine Mischung aus zwei oder mehr nichtionischen Tensiden in dem Reinigungsmittel eingesetzt wird.

Ein in den hierin beschriebenen im erfindungsgemäßen Verfahren eingesetzten Reinigungsmitteln einsetzbares nichtionisches Tensid kann jedes der dem Fachmann bekannten nichtionischen Tenside sein. In bevorzugten Ausführungsformen werden nichtionische Tenside aus der Gruppe der alkoxylierten Alkohole verwendet. Eine Klasse bevorzugt einsetzbarer nichtionischer Tenside, die entweder als alleiniges nichtionisches Tensid oder in Kombination mit anderen nichtionischen Tensiden eingesetzt werden können, sind demnach alkoxylierte, vorzugsweise ethoxylierte oder ethoxylierte und propoxylierte Fettalkohole.

In verschiedenen bevorzugten Ausführungsformen werden daher ein Fettalkoholalkoxylat, insbesondere ein Fettalkoholethoxylat, eingesetzt. Insbesondere sind nicht endgruppenverschlossene Fettalkoholalkoxylate bevorzugt.

In bevorzugten Ausführungsformen hat das Fettalkoholethoxylat die Formel

R¹-O-(EO)ₘ-H,

wobei R¹ eine lineare oder verzweigte, substituierte oder unsubstituierte Alkylgruppe mit 12 bis 24, insbesondere 14 bis 20, insbesondere 16 bis 18 C-Atomen ist; EO eine Ethylenoxid-Einheit ist; und m 10 bis 50, insbesondere 20 bis 30, vorzugsweise 22 bis 27, insbesondere 25 ist.

In besonders bevorzugten Ausführungsformen hat das Fettalkoholethoxylat die Formel

R¹-O-(EO)ₘ-H,

wobei R¹ eine lineare oder verzweigte, substituierte oder unsubstituierte Alkylgruppe mit 16 bis 18 C-Atomen ist; EO eine Ethylenoxid-Einheit ist; und m 20 bis 30, vorzugsweise 22 bis 27, insbesondere 25 ist.

In einer Ausführungsform ist die Alkylgruppe R¹ eine lineare, vorzugsweise unsubstituierte, Alkylgruppe mit 16 bis 18 C-Atomen.

Das Fettalkoholalkoxylat, bevorzugt das Fettalkoholethoxylat, insbesondere das Fettalkoholethoxylat der genannten Formeln kann in dem Reinigungsmittel in einer Menge von 0,1 bis 20 Gew.-%, vorzugsweise 1 bis 13 Gew.-%, besonders bevorzugt 3 bis 9 Gew.-% bezogen auf das Gesamtgewicht des Reinigungsmittels enthalten sein. Derartige Mengen sind bevorzugt, um eine ausreichende Fettlösung und - entfernung zu gewährleisten.

Es ist bevorzugt, dass ein in den hierin beschriebenen Reinigungsmitteln einsetzbares nichtionische Tensid in einer absoluten Menge von 0,1 bis 4 g/job, vorzugsweise 1 bis 3 g/job, insbesondere 1,2 bis 2,2 g/job, beispielsweise 1,5 g/job in der Zusammensetzung enthalten ist.

Es ist dabei besonders bevorzugt, dass ein Fettalkoholethoxylat der Formel

R¹-O-(EO)ₘ-H,

wobei R¹ eine lineare oder verzweigte, substituierte oder unsubstituierte Alkylgruppe mit 12 bis 24, insbesondere 14 bis 20, insbesondere 16 bis 18 C-Atomen ist; EO eine Ethylenoxid-Einheit ist; und m 10 bis 50, insbesondere 20 bis 30, vorzugsweise 22 bis 27, insbesondere 25 ist; in einer absoluten Menge von 0,1 bis 4 g/job, vorzugsweise 1 bis 3 g/job, insbesondere 1,2 bis 2,2 g/job, beispielsweise 1,5 g/job in der Zusammensetzung enthalten ist.

Es ist dabei besonders bevorzugt, dass ein Fettalkoholethoxylat der Formel

R¹-O-(EO)ₘ-H,

wobei R¹ eine lineare oder verzweigte, substituierte oder unsubstituierte Alkylgruppe mit 16 bis 18 C-Atomen ist; EO eine Ethylenoxid-Einheit ist; und m 20 bis 30, vorzugsweise 22 bis 27, insbesondere 25 ist; in einer absoluten Menge von 0,1 bis 4 g/job, vorzugsweise 1 bis 3 g/job, insbesondere 1,2 bis 2,2 g/job, beispielsweise 1,5 g/job in der Zusammensetzung enthalten ist.

Das nichtionische Tensid ist vorzugsweise ein bei Standardbedingungen (Temperatur 25°C, Druck 1013 mbar) festes Fettalkoholethoxylat und kann vorzugsweise in Form eines Pulvers oder Granulats eingesetzt werden.

Als nichtionisches Tensid eignet sich außerdem ein Fettalkoholalkoxylat der Formel

R²-(AO)w-R³,

wobei R² für eine lineare oder verzweigte, substituierte oder unsubstituierte Alkylgruppe mit 8 bis 16 C-Atomen steht; R³ für H oder einen linearen oder verzweigten Kohlenwasserstoffrest mit 2 bis 26 Kohlenstoffatomen steht; jedes A unabhängig für einen Rest aus der Gruppe -CH₂CH₂- und-CH₂-CH(CH₃)-, -CH₂-CH₂-CH₂-, -CH₂-CH₂-CH₂-CH₂-, -CH₂-CH(CH₂-CH₃)-, -CH₂-C(CH₃)₂- oder -CH₂-CH₂-CH(CH₃)- steht, wobei mindestens ein A -CH₂CH₂- und mindestens ein A -CH₂-CH(CH3)-, -CH₂-CH₂-CH₂-, -CH₂-CH₂-CH₂-CH₂-, -CH₂-CH(CH₂-CH₃)-, -CH₂-C(CH₃)₂- oder-CH₂-CH₂-CH(CH₃)- ist; und w für eine ganze Zahl von 2 bis 50, vorzugsweise 10 bis 30, steht.

In verschiedenen Ausführungsformen beträgt das Verhältnis der Ethylenoxid-Einheiten und der höheren Alkylenoxid-Einheiten in dem Fettalkoholalkoxylat der Formel 12:1 bis 1:1, vorzugsweise 10:1 bis 2:1, insbesondere 6:1 bis 3:1. Besonders bevorzugt sind solche Fettalkohohlalkoxylate der Formel, bei denen R² eine lineare Alkylgruppe mit 12-16 C-Atomen sowie R³ =H und w=10 bis 30 ist.

Das Fettalkoholalkoxylat dieser Formel kann in der Zusammensetzung insbesondere in einer Menge von 0,01 bis 3 Gew.-% bezogen auf die Zusammensetzung enthalten sein. Die absolute Menge des Fettalkoholalkoxylats dieser Formel in der Zusammensetzung kann insbesondere 0,001 bis 3 g/job, vorzugsweise 0,01 bis 1 g/job, noch bevorzugter 0,1 bis 0,5, ganz besonders bevorzugt 0,2 g/job betragen.

Als nichtionische Tenside eignen sich außerdem beispielsweise Alkylglykoside der allgemeinen Formel RO(G)ₓ, in der R einem primären lineare oder methylverzweigten, insbesondere in 2-Stellung methylverzweigten aliphatischen Rest mit 8 bis 22, vorzugsweise 12 bis 18 C-Atomen entspricht und G das Symbol ist, das für eine Glykose-Einheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Eine weitere Klasse einsetzbarer nichtionischer Tenside sind alkoxylierte, vorzugsweise ethoxylierte oder ethoxylierte und propoxylierte Fettsäurealkylester, vorzugsweise mit 1 bis 4 Kohlenstoffatomen in der Alkylkette.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Weitere geeignete Tenside sind die als PHFA bekannten Polyhydroxyfettsäureamide.

Schließlich können auch weitere schwachschäumende nichtionische Tenside aus der Gruppe der alkoxylierten Alkohole eingesetzt werden.

Ein weiterer bevorzugter Gegenstand ist demnach ein Verfahren, welches Reinigungsmittel einsetzt, wobei die Zusammensetzung nichtionisches Tensid enthält, bevorzugt in einer Menge von 0,1 bis 20 Gew.-%, besonders bevorzugt 5 bis 17 Gew.-%, insbesondere bevorzugt 7 bis 15 Gew.-%, bezogen auf die Gesamtmenge an Reinigungsmittel. Außerdem ist es bevorzugt, dass Mischungen verschiedener nichtionischer Tenside eingesetzt werden.

Ein weiterer bevorzugter Gegenstand ist demnach ein Verfahren, bei dem ein Reinigungsmittel eingesetzt wird, wobei die Zusammensetzung nichtionisches Tensid enthält, wobei es sich bei dem nichtionischen Tensid um ein Fettalkoholethoxylat der Formel

R¹-O-(EO)ₘ-H

handelt, wobei R¹ eine lineare oder verzweigte, substituierte oder unsubstituierte Alkylgruppe mit 16 bis 18 C-Atomen ist; EO eine Ethylenoxid-Einheit ist; und m 20 bis 30, vorzugsweise 22 bis 27, insbesondere 25 ist, bevorzugt in einer Menge von 0,1 bis 20 Gew.-%, besonders bevorzugt 5 bis 16 Gew.-%, insbesondere bevorzugt 6 bis 14 Gew.-%, bezogen auf die Gesamtmenge an Zusammensetzung.

Die Zusammensetzungen der im erfindungsgemäßen Verfahren eingesetzten Reinigungsmittel können weitere Bestandteile, bevorzugt mindestens einen weiteren Bestandteil, enthalten, vorzugsweise ausgewählt aus der Gruppe bestehend aus weiteren Gerüststoffen, Tensiden, Polymeren, Enzymen, Korrosionsinhibitoren, Glaskorrosionsinhibitoren, Verdickern, Schauminhibitoren, Farbstoffen, Desintegrationshilfsmitteln, Duftstoffen und Parfümträgern, bevorzugt ein oder mehrere Polymere.

Bevorzugte anionische Tenside sind Fettalkoholsulfate, Fettalkoholethersulfate, Dialkylethersulfate, Monoglyceridsulfate, Alkylbenzolsulfonate, Olefinsulfonate, Alkansulfonate, Ethersulfonate, n-AIkylethersulfonate, Estersulfonate und Ligninsulfonate. Ebenfalls im Rahmen der vorliegenden Erfindung verwendbar sind Fettsäurecyanamide, Sulfosuccinate (Sulfobernsteinsäureester), insbesondere Sulfobernsteinsäuremono- und -di-Alkylester mit 8 bis 18 C-Atomen, Sulfosuccinamate, Sulfosuccinamide, Fettsäureisethionate, Acylaminoalkansulfonate (Fettsäuretauride), Fettsäuresarcosinate, Ethercarbonsäuren und Alkyl(ether)phosphate sowie α-Sulfofettsäuresalze, Acylglutamate, Monoglyceriddisulfate und Alkylether des Glycerindisulfats.

Die anionischen Tenside werden vorzugsweise als Natriumsalze eingesetzt, können aber auch als andere Alkali- oder Erdalkalimetallsalze, beispielsweise Kalium- oder Magnesiumsalze, sowie in Form von Ammonium- oder Mono-, Di-, Tri- bzw. Tetraalkylammoniumsalzen enthalten sein, im Falle der Sulfonate auch in Form ihrer korrespondierenden Säure, z.B. Dodecylbenzolsulfonsäure.

Zu den zusätzlich einsetzbaren Gerüststoffen zählen insbesondere Carbonate, organische Co-Builder und Silikate.

Möglich ist beispielsweise der Einsatz von Carbonat(en) und/oder Hydrogencarbonat(en), vorzugsweise Alkalicarbonat(en), besonders bevorzugt Natriumcarbonat. Alkalicarbonate, insbesondere Natriumcarbonat, können in verschiedenen Ausführungsformen der Erfindung in einer Menge von 1 bis 40 Gew.-%, vorzugsweise 2 bis 30 Gew.-%, bezogen auf das Gesamtgewicht des Reinigungsmittels, im Reinigungsmittel enthalten sein.

Als organische Co-Builder sind insbesondere Polycarboxylate / Polycarbonsäuren, polymere Carboxylate, Asparaginsäure, Polyacetale und Dextrine zu nennen.

Brauchbare organische Gerüstsubstanzen sind beispielsweise die in Form der freien Säure und/oder ihrer Natriumsalze einsetzbaren Polycarbonsäuren, wobei unter Polycarbonsäuren solche Carbonsäuren verstanden werden, die mehr als eine Säurefunktion tragen. Beispielsweise sind dies Citronensäure, Adipinsäure, Bernsteinsäure, Glutarsäure, Äpfelsäure, Weinsäure, Maleinsäure, Fumarsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen.

Bei einem möglichen Einsatz der genannten Gerüststoffe in der erfindungsgemäßen Reinigungsmittelzusammensetzung und/oder in der Reinigungsmittelportion ist deren Einfluss auf das gegebenenfalls vorhandene Puffersystem zu beachten.

Als Gerüststoffe sind weiterhin polymere Polycarboxylate geeignet, dies sind beispielsweise die Alkalimetallsalze der Polyacrylsäure oder der Polymethacrylsäure, beispielsweise solche mit einer relativen Molekülmasse von 500 bis 70000 g/mol.

Es können sowohl Homopolymere als auch Copolymere sowie Terpolymere eingesetzt werden, auch komplexere Polymertypen sind möglich. Geeignete Polymere sind insbesondere Polyacrylate und/oder Copolymere und/oder Terpolymere, enthaltend Acrylatmonomere, die bevorzugt eine Molekülmasse von 1000 bis 20000 g/mol aufweisen. Aufgrund ihrer überlegenen Löslichkeit können aus dieser Gruppe wiederum die kurzkettigen Polyacrylate, die Molmassen von 1000 bis 10000 g/mol, und besonders bevorzugt von 3000 bis 5000 g/mol, aufweisen, bevorzugt sein.

Als Polycarboxylat wird vorzugsweise ein copolymeres Polyacrylat, vorzugsweise ein Sulfopolymer vorzugsweise ein copolymeres Polysulfonat, vorzugsweise ein hydrophob modifiziertes copolymeres Polysulfonat eingesetzt. Die Copolymere können zwei, drei, vier oder mehr unterschiedliche Monomereinheiten aufweisen. Bevorzugte copolymere Polysulfonate enthalten neben Sulfonsäuregruppen-haltigem(n) Monomer(en) wenigstens ein Monomer aus der Gruppe der ungesättigten Carbonsäuren.

Als ungesättigte Carbonsäure(n) wird/werden mit besonderem Vorzug ungesättigte Carbonsäuren der Formel R¹(R²)C=C(R³)COOH eingesetzt, in der R¹ bis R³ unabhängig voneinander für -H, -CH₃ , einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH2 , -OH oder-COOH substituierte Alkyl- oder Alkenylreste wie vorstehend definiert oder für -COOH oder -COOR⁴ steht, wobei R⁴ ein gesättigter oder ungesättigter, geradkettiger oder verzweigter Kohlenwasserstoffrest mit 1 bis 12 Kohlenstoffatomen ist.

Besonders bevorzugte ungesättigte Carbonsäuren sind Acrylsäure, Methacrylsäure, Ethacrylsäure, α-Chloroacrylsäure, α-Cyanoacrylsäure, Crotonsäure, α-Phenyl-Acrylsäure, Maleinsäure, Maleinsäureanhydrid, Fumarsäure, Itaconsäure, Citraconsäure, Methylenmalonsäure, Sorbinsäure, Zimtsäure oder deren Mischungen. Einsetzbar sind selbstverständlich auch die ungesättigten Dicarbonsäuren.

Bei den Sulfonsäuregruppen-haltigen Monomeren sind solche der Formel R⁵(R⁶)C=C(R⁷)-X-SO₃H bevorzugt, in der R⁵ bis R⁷ unabhängig voneinander für-H, -CH₃ , einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder -COOH substituierte Alkyl- oder Alkenylreste oder für -COOH oder -COOR⁴ steht, wobei R⁴ ein gesättigter oder ungesättigter, geradkettigter oder verzweigter Kohlenwasserstoffrest mit 1 bis 12 Kohlenstoffatomen ist, und X für eine optional vorhandene Spacergruppe steht, die ausgewählt ist aus -(CH₂)ₙ - mit n = 0 bis 4, -COO-(CH₂)ₖ - mit k = 1 bis 6, -C(O)-NH-C(CH₃)₂-, -C(O)-NH-C(CH₃)₂-CH₂- und -C(O)-NH-CH(CH₃)-CH₂-.

Unter diesen Monomeren bevorzugt sind solche der Formeln H₂C=CH-X-SO₃H, H₂C=C(CH₃)-X-SO₃H oder HO₃S-X-(R⁶)C=C(R⁷)-X-SO₃H, in denen R⁶ und R⁷ unabhängig voneinander ausgewählt sind aus -H, -CH₃ , -CH₂CH₃ , -CH₂CH₂CH₃ und -CH(CH₃)₂ und X für eine optional vorhandene Spacergruppe steht, die ausgewählt ist aus -(CH₂)ₙ- mit n = 0 bis 4, -COO-(CH₂)ₖ - mit k = 1 bis 6, -C(O)-NH-C(CH₃)₂-, -C(O)-NH-C(CH₃)₂-CH₂- und -C(O)-NH-CH(CH₃)-CH₂-.

Gemäß einer besonders bevorzugten Ausführungsform kann ein Polymer umfassend als sulfonsäuregruppenhaltiges Monomer Acrylamidopropansulfonsäuren, Methacrylamidomethylpropansulfonsäuren oder Acrylamidomethylpropansulfonsäure enthalten sein.

Besonders bevorzugte Sulfonsäuregruppen-haltige Monomere sind dabei 1-Acrylamido-1-propansulfonsäure, 2-Acrylamido-2-propansulfonsäure, 2-Acrylamido-2-methyl-1-propansulfonsäure, 2-Methacrylamido-2-methyl-1-propansulfonsäure, 3-Methacrylamido-2-hydroxy-propansulfonsäure, Allylsulfonsäure, Methallylsulfonsäure, Allyloxybenzolsulfonsäure, Methallyloxybenzolsulfonsäure, 2-Hydroxy-3-(2-propenyloxy)propansulfonsäure, 2-Methyl-2-propen1-sulfonsäure, Styrolsulfonsäure, Vinylsulfonsäure, 3-Sulfopropylacrylat, 3-Sulfopropylmethacrylat, Sulfomethacrylamid, Sulfomethylmethacrylamid sowie Mischungen der genannten Säuren oder deren wasserlösliche Salze. In den Polymeren können die Sulfonsäuregruppen ganz oder teilweise in neutralisierter Form vorliegen, das heißt dass das acide Wasserstoffatom der Sulfonsäuregruppe in einigen oder allen Sulfonsäuregruppen gegen Metallionen, vorzugsweise Alkalimetallionen und insbesondere gegen Natriumionen, ausgetauscht sein kann. Der Einsatz von teil- oder vollneutralisierten Sulfonsäuregruppen-haltigen Copolymeren ist erfindungsgemäß bevorzugt.

Die Monomerenverteilung der erfindungsgemäß bevorzugt eingesetzten Copolymere beträgt bei Copolymeren, die nur Carbonsäuregruppen-haltige Monomere und Sulfonsäuregruppen-haltige Monomere enthalten, vorzugsweise jeweils 5 bis 95 Gew.-%, besonders bevorzugt beträgt der Anteil des Sulfonsäuregruppen-haltigen Monomers 50 bis 90 Gew.-% und der Anteil des Carbonsäuregruppen-haltigen Monomers 10 bis 50 Gew.-%, die Monomere sind hierbei vorzugsweise ausgewählt aus den zuvor genannten. Die Molmasse der erfindungsgemäß bevorzugt eingesetzten Sulfo-Copolymere kann variiert werden, um die Eigenschaften der Polymere dem gewünschten Verwendungszweck anzupassen. Bevorzugte Reinigungsmittel sind dadurch gekennzeichnet, dass die Copolymere Molmassen von 2000 bis 200.000 g·mol⁻¹, vorzugsweise von 4000 bis 25.000 g·mol⁻¹ und insbesondere von 5000 bis 15.000 g·mol⁻¹ aufweisen.

In einer weiteren bevorzugten Ausführungsform umfassen die Copolymere neben Carboxylgruppen-haltigem Monomer und Sulfonsäuregruppen-haltigem Monomer weiterhin wenigstens ein nichtionisches, vorzugsweise hydrophobes Monomer.

Besonders bevorzugt kann ein anionisches Copolymer in einer Ausführungsform enthalten sein, wobei als anionisches Copolymer ein Copolymer, umfassend
i) Carbonsäuregruppen-haltige Monomere
ii) Sulfonsäuregruppen-haltige Monomere
iii) nichtionische Monomere, insbesondere hydrophobe Monomere
eingesetzt wird.

Als nichtionische Monomere werden vorzugsweise Monomere der allgemeinen Formel R¹(R²)C=C(R³)-X-R⁴ eingesetzt, in der R¹ bis R³ unabhängig voneinander für-H, -CH₃ oder-C₂H₅ steht, X für eine optional vorhandene Spacergruppe steht, die ausgewählt ist aus -CH₂-, -C(O)O-und -C(O)-NH-, und R⁴ für einen geradkettigen oder verzweigten gesättigten Alkylrest mit 2 bis 22 Kohlenstoffatomen oder für einen ungesättigten, vorzugsweise aromatischen Rest mit 6 bis 22 Kohlenstoffatomen steht.

Besonders bevorzugte nichtionische Monomere sind Buten, Isobuten, Penten, 3-Methylbuten, 2-Methylbuten, Cyclopenten, Hexen, Hexen-1, 2-Methlypenten-1, 3-Methlypenten-1, Cyclohexen, Methylcyclopenten, Cyclohepten, Methylcyclohexen, 2,4,4-Trimethylpenten-1, 2,4,4-Trimethylpenten-2,2,3-Dimethylhexen-1, 2,4-Diemthylhexen-1, 2,5-Dimethlyhexen-1, 3,5-Dimethylhexen-1, 4,4-Dimethylhexan-1, Ethylcyclohexyn, 1-Octen, α-Olefine mit 10 oder mehr Kohlenstoffatomen wie beispielsweise 1-Decen, 1-Dodecen, 1-Hexadecen, 1-Oktadecen und C₂₂-α-Olefin, 2-Styrol, α-Methylstyrol, 3-Methylstyrol, 4-Propylstryol, 4-Cyclohexylstyrol, 4-Dodecylstyrol, 2-Ethyl-4-Benzylstyrol, 1-Vinylnaphthalin, 2-Vinylnaphthalin, Acrylsäuremethylester, Acrylsäureethylester, Acrylsäurepropylester, Acrylsäurebutylester, Acrylsäurepentylester, Acrylsäurehexylester, Methacrylsäuremethylester, N-(Methyl)acrylamid, Acrylsäure-2-Ethylhexylester, Methacrylsäure-2-Ethylhexylester, N-(2-Ethylhexyl)acrylamid, Acrylsäureoctylester, Methacrylsäureoctylester, N-(Octyl)acrylamid, Acrylsäurelaurylester, Methacrylsäurelaurylester, N-(Lauryl)acrylamid, Acrylsäurestearylester, Methacrylsäurestearylester, N-(Stearyl)acrylamid, Acrylsäurebehenylester, Methacrylsäurebehenylester und N-(Behenyl)acrylamid oder deren Mischungen, insbesondere Acrylsäure, Ethylacrylat, 2-Acrylamido-2-methylpropansulfonsäure (AMPS) sowie deren Mischungen.

Polyacrylat-haltige Polymere können in Mengen von 0,5 bis 15 Gew.-%, bevorzugt 0,6 bis 10 Gew.-%, besonders bevorzugt in Mengen von 0,8 bis 3 Gew.-% oder 1 bis 5 Gew.-%, bezogen auf das Gesamtgewicht der Zusammensetzung, in der Zusammensetzung enthalten sein. Dabei können auch Mischungen von verschiedenen Polymeren eingesetzt werden.

Die Mittel können als Gerüststoff weiterhin kristalline schichtförmige Silikate der allgemeinen Formel NaMSix O₂ₓ₊₁ · y H₂O enthalten, worin M Natrium oder Wasserstoff darstellt, x eine Zahl von 1,9 bis 22, vorzugsweise von 1,9 bis 4, wobei besonders bevorzugte Werte für x 2, 3 oder 4 sind, und y für eine Zahl von 0 bis 33, vorzugsweise von 0 bis 20 steht. Einsetzbar sind auch amorphe Natriumsilikate mit einem Modul Na₂O : SiO₂ von 1:2 bis 1:3,3, vorzugsweise von 1:2 bis 1:2,8 und insbesondere von 1:2 bis 1:2,6, welche vorzugsweise löseverzögert sind und Sekundärwascheigenschaften aufweisen. In bevorzugten Mitteln wird der Gehalt an Silikaten, bezogen auf das Gesamtgewicht der Zusammensetzung, auf Mengen unterhalb 10 Gew.-%, vorzugsweise unterhalb 7 Gew.-% und insbesondere unterhalb 5 Gew.-% begrenzt. Besonders bevorzugte Zusammensetzungen der Reinigungsmittelportion enthalten Silikat als Gerüststoff. Ganz besonders bevorzugte Zusammensetzungen enthalten Silikat in dem angegebenen Mengenbereich in Anteil A, bezogen auf das Gesamtgewicht der Zusammensetzung. Weiterhin ist es dabei bevorzugt, dass die Menge an Silikat, bezogen auf die Masse des Anteils A, zwischen 5 und 50 Gew.-%, bevorzugt zwischen 10 und 30 Gew.-%, ganz besonders bevorzugt zwischen 15 und 25 Gew.-% beträgt.

Als Parfümöle bzw. Duftstoffe können im Rahmen der vorliegenden Erfindung einzelne Riechstoffverbindungen, z.B. die synthetischen Produkte vom Typ der Ester, Ether, Aldehyde, Ketone, Alkohole und Kohlenwasserstoffe verwendet werden. Bevorzugt werden jedoch Mischungen verschiedener Riechstoffe verwendet, die gemeinsam eine ansprechende Duftnote erzeugen. Solche Parfümöle können auch natürliche Riechstoffgemische enthalten, wie sie aus pflanzlichen Quellen zugänglich sind, z.B. Pinien-, Citrus-, Jasmin-, Patchouli-, Rosen- oder Ylang-Ylang-Öl.

In bevorzugten Ausführungsformen ist die Reinigungsmittelportion und/oder die Reinigungsmittelzusammensetzung phosphat- und/oder phosphonatfrei. "Phosphatfrei" und "phosphonatfrei", wie hierin verwendet, bedeutet, dass die betreffende Zusammensetzung im Wesentlichen frei von Phosphaten bzw. Phosphonaten ist, d.h. insbesondere Phosphate bzw. Phosphonate in Mengen kleiner als 0,1 Gew.-%, vorzugsweise kleiner als 0,01 Gew.-% bezogen auf die Gesamtportion enthält. Bevorzugt ist, dass eine Gesamtmenge an Phosphor von 0,3 g pro Job vorzugsweise 0,03 g nicht überschritten wird.

Das Volumen der Reinigungsflüssigkeit sollte zumindest ein Drittel des Volumens der Rührschüssel entsprechen. Hierdurch kann sichergestellt werden, dass auch die Randbereiche im Inneren der Schüssel gründlich gereinigt werden.

Die Reinigungsflüssigkeit sollte nicht mehr als 90% des Volumens der Rührschüssel umfassen. Sollte die Rührschüssel nicht wasserdicht verschließbar sein, würde so Reinigungsflüssigkeit bei dem erfindungsgemäßen Reinigungsvorgang aus der Rührschüssel austreten. Dies würde zwar den Reinigungsvorgang an sich nicht nachteilig beeinflussen, würde jedoch zu einer unerwünschten Verunreinigung der Rührschüssel von außen bzw. der Umgebung führen.

Übliche elektromotorisch betriebene Küchenmaschinen weisen eine Rührschüssel mit einem Volumen von etwa 1,5 bis 3,5 I auf. Entsprechend beträgt die Menge der Reinigungslösung etwa 0,5 bis 2,5 I, vorzugsweise 1,5 bis 2 I.

Die genaue Menge eine Reinigungsflüssigkeit ist dabei auch abhängig von der Menge an zubereiteter Speise und damit wie sehr die Innenwand der Rührschüssel verunreinigt ist. Wurde das Volumen der Rührschüssel bei der Zubereitung von Speisen oder Lebensmitteln nur zu einem geringen Teil genutzt, genügt ein geringeres Volumen an Reinigungsflüssigkeit. Bei größeren Mengen an zubereiteten Speisen/Lebensmitteln, wird ggf. eine größere Menge an Reinigungsflüssigkeit benötigt.

Bei dem erfindungsgemäßen Verfahren wird die Rührgeschwindigkeit so eingestellt, dass einerseits alle Bestandteile der Rührschüssel gereinigt werden. Darüber hinaus soll jedoch auch das Rührwerk gereinigt werden. Gerade bei im Bereich des Bodens der Schüssel befindlichen Rührwerken kann dies schwierig sein, da sich zwischen dem Rührwerk und dem Boden der Rührschüssel Verschmutzungen ansammeln. Um diese zu entfernen, werden gewisse Scherkräfte benötigt. Stellt man nun die Rührgeschwindigkeit jedoch zu hoch ein, bildet sich ein Bereich unterhalb des Rührwerks aus, in dem sich keine Reinigungsflüssigkeit befindet, da durch die hohe Drehgeschwindigkeit des Rührwerks die Reinigungsflüssigkeit vollständig an die Wand der Rührschüssel gedrückt wird. Wählt man die Rührgeschwindigkeit zu gering, sind die wirkenden Scherkräfte nicht ausreichend, um die Verschmutzungen zu entfernen.

Bei hohen Geschwindigkeiten ist zudem zu beachten, dass gelöste Verunreinigungen nicht in den oberen Randbereich der Rührschüssel transportiert werden und dort anhaften. Dies kann bei zu hohen Drehgeschwindigkeiten erfolgen.

Neben der Rührgeschwindigkeit ist auch die Heizrate zu berücksichtigen. Bekanntermaßen ist eine Reinigung bei gegenüber Raumtemperatur erhöhten Temperaturen bevorzugt. Dies liegt auch daran, dass bei den üblicherweise beispielsweise in Geschirrspülmaschinen herrschenden Temperaturen die in Reinigungsmittel vorhandenen Enzyme aktiv sind und so die optimale Reinigungsleistung erzielt werden kann. Im erfindungsgemäßen Verfahren ist der Energieeintrag und die damit verbundene Heizrate so zu wählen, dass die Rührschüssel nicht zu schnell heiß wird, da hier weiteres ankleben der Anschmutzung erfolgen kann. Zudem soll die Rührschüssel nicht zu heiß werden, damit man sie nach dem Reinigungsvorgang entnehmen und ausspülen kann, um die gelösten Verunreinigungen abschließend zu entfernen und ggf. Reste an Reinigungsmittel aus der Schüssel zu entfernen.

Weiterhin ist ein konstanter Energieeintrag zu bevorzugen, in dem eine Reinigungslösung konstant um 1-10 K/min (Kelvin pro Minute), insbesondere von 2-9 K/min, bevorzugt von 4-9 K/min, vorzugsweise von 6-8 K/min erfolgt. Diese Heizrate, welche zur Erwärmung der Reinigungsflüssigkeit führt, kann insbesondere durch einen Energieeintrag von 100-400 W·h, insbesondere von 125-250 W·h erreicht werden. Höhere Heizraten bzw. Energieeintragsraten sind nicht notwendig und führen nicht zu einem besseren Ergebnis. Zu geringe Energieeinträge bzw. Heizraten führen dazu, dass in der gewünschten kurzen Zeit keine Verbesserung der Reinigungsleistung erzielt werden kann.

Der Energieeintrag führt im erfindungsgemäßen Verfahren dazu, dass die Reinigungsflüssigkeit erwärmt wird. Dies führt zu einer besonders effektiven Reinigung, welche darauf zurückzuführen ist, dass bei erhöhter Temperatur eine verbesserte Reinigung in kürzerer Zeit ermöglicht wird (Sinnerscher Kreis). Der Sinnersche Kreis geht davon aus, dass Chemie, Mechanik, Temperatur und Zeit den Erfolg der Reinigung bestimmen, wobei die vier Faktoren voneinander abhängig sind. Durch eine Erhöhung der Temperatur kann somit bei gleicher Chemie (Reinigungsmittel: Zusammensetzung und Konzentration) und gleicher Mechanik eine kürzere Reinigungsdauer ermöglicht werden.

Zudem enthalten Reinigungsmittel häufig Enzyme, welche bei erhöhten Temperaturen ab etwa 35 °C, insbesondere ab etwa 40 °C ihre Aktivität voll entfalten. Bei Temperaturen von 80 °C oder mehr werden die Enzyme jedoch abgetötet, so dass die maximale Temperatur der Reinigungsflüssigkeit während des Reinigungsverfahrens 80 °C nicht übersteigt. Insbesondere beträgt die maximale Temperatur 75 °C oder weniger, vorzugsweise 70 °C oder weniger. Eine ausreichende Reinigung wird erzielt, wenn die Reinigungsflüssigkeit eine Temperatur von 65 °C oder weniger aufweist. Auch bei Temperaturen von 60 °C oder 50 °C kann eine effektive Reinigung erreicht werden. Vorzugsweise beträgt die Temperatur der Reinigungsflüssigkeit daher 35 °C bis 70 °C, insbesondere von 40 °C bis 65 °C, bevorzugt von 45 °C bis 60 °C, besonders bevorzugt von 50 °C bis 55 °C.

Überraschenderweise hat sich gezeigt, dass eine besonders effektive Reinigung der Rührschüssel sowie insbesondere des Rührwerks erreicht werden kann, wenn die Rührgeschwindigkeit des Rührwerks während des Reinigungsvorgangs geändert wird. Vorzugsweise erfolgt die Änderung der Rührgeschwindigkeit wenigstens einmal, insbesondere wenigstens zweimal, besonders bevorzugt wenigstens dreimal. Auch viermalige oder fünfmalige oder weitere Änderungen der Rührgeschwindigkeit des Rührwerks während des Reinigungsvorgangs sind erfindungsgemäß möglich.

Eine weitere Aufgabe der vorliegenden Erfindung ist es, dass das Reinigungsverfahren, also das erfindungsgemäße Verfahren, schneller ist als eine Reinigung in der Geschirrspülmaschine. Insbesondere soll es innerhalb eines Zeitraums von 10 Minuten oder weniger, vorzugsweise von 7 Minuten oder weniger, insbesondere von etwa 5 Minuten vollständig abgeschlossen sein. So wird ein besonderer Zeitvorteil ermöglicht. Überraschenderweise hat sich gezeigt, dass dies mit dem erfindungsgemäßen Verfahren ermöglicht wird.

Besonders bevorzugt beträgt daher die Dauer des erfindungsgemäßen Verfahrens 10 Minuten oder weniger, insbesondere 7 Minuten oder weniger, besonders bevorzugt 6 Minuten oder weniger, insbesondere bevorzugt 5 Minuten oder weniger.

In einer besonders bevorzugten Ausführungsform kann das erfindungsgemäße Verfahren in drei Reinigungsphasen unterteilt werden, so dass während des Reinigungsvorgangs zweimal die Rührgeschwindigkeit geändert wird. Hierdurch erhält man eine erste Reinigungsphase, bei der eine hohe Drehgeschwindigkeit vorherrscht. Diese ist gefolgt von einer zweiten Phase, in der die Rührgeschwindigkeit des Rührwerks gegenüber der ersten Phase abgesenkt wird. Abschließend wird in der dritten Phase die Rührgeschwindigkeit erneut erhöht. Vorzugsweise beträgt die Rührgeschwindigkeit der dritten Phase der der ersten Phase oder ist gegenüber dieser sogar erhöht.

In einer solch bevorzugten Ausführungsform umfasst das Verfahren somit:
(i) zu Beginn des Reinigungsverfahrens liegt die Rührgeschwindigkeit im Bereich von 500 bis 11000 U/min, vorzugsweise von 750 bis 5000 U/min,
(ii) anschließend wird die Rührgeschwindigkeit auf einen Bereich von 50 bis 450 U/min, vorzugsweise von 100 bis 400 U/min, reduziert,
(iii) abschließend wird die Rührgeschwindigkeit erneut auf einen Bereich von 500 bis 11000 U/min, vorzugsweise von 750 bis 5000 U/min eingestellt.

In der ersten Phase herrschen somit hohe Geschwindigkeiten vor, die dafür sorgen, dass die Rührschüssel und hier insbesondere die Wände gereinigt werden. In der zweiten Phase wird der Boden der Schüssel sowie das Rührwerk gereinigt. Im abschließenden Reinigungsschritt (Phase (iii)) werden nochmals stark anhaftende Verschmutzungen gelöst, und zwar sowohl im Bereich des Rührwerks als auch von den Wänden der Rührschüssel.

In der erste und dritten Phase (Phasen (i) und (iii)) des erfindungsgemäßen Verfahrens, liegen die Rührgeschwindigkeiten vorzugsweise im Bereich von 500 bis 11000 U/min, insbesondere von 550 bis 10000 U/min, bevorzugt von 600 bis 8000 U/min, besonders bevorzugt von 650 bis 6000 U/min und insbesondere bevorzugt von 750 bis 5000 U/min. Die Rührgeschwindigkeit der zweiten Phase (ii) liegt vorzugsweise im Bereich von 50 bis 450 U/min, insbesondere von 75 bis 425 U/min und insbesondere bevorzugt von 100 bis 400 U/min.

Damit die Reinigung effektiv erfolgt, werden die erste und die dritte Phase jeweils vorzugsweise über eine Dauer von 30 Sekunden bis 200 Sekunden, insbesondere von 45 Sekunden bis 150 Sekunden durchgeführt. Die Dauer der zweiten Phase (ii) beträgt vorzugsweise 50 Sekunden bis 200 Sekunden, insbesondere 45 Sekunden bis 150 Sekunden, besonders bevorzugt 60 Sekunden bis 120 Sekunden.

Erfindungsgemäß ist es weiterhin möglich, dass während der ersten und/oder der zweiten und/oder dritten Phase die Rührgeschwindigkeit einmal, zweimal oder dreimal geändert wird. Besonders bevorzugt wird die Rührgeschwindigkeit innerhalb einer Phase einmal oder zweimal geändert. Dabei kann nur während einer der Phasen oder während zwei verschiedenen Phasen geändert werden. Auch innerhalb aller dreier Phasen kann die Rührgeschwindigkeit geändert werden.

Nach Durchführung des Reinigungsverfahrens sind Verschmutzungen von der Rührschüssel sowie dem Rührwerk gelöst und befinden sich in der Reinigungsflüssigkeit im Inneren der Schüssel. Entsprechend wird anschließend die Rührschüssel entleert und Rührschüssel und Rührwerk mit klarem Wasser gespült. Im Anschluss steht die elektromotorisch betriebene Küchenmaschine für die Zubereitung von Speisen erneut bereit.

Im nachfolgenden Ausführungsbeispiel wird die vorliegende Erfindung in nicht einschränkender Weise weiter erläutert.

### Ausführungsbeispiel:

In einer elektromotorisch betriebenen Küchenmaschine (Thermomix^{®} der Fa. Vorwerk) wurde als Anschmutzung Risotto hergestellt. Risotto wurde als Anschmutzung gewählt, da diese als am schwierigsten zu entfernen gilt. Zum einen haften die Reiskörner an der Schüssel und dem Rührwerk. Zum anderen sind Stärke-Verschmutzungen von Edelstahl nur schwierig zu entfernen.

Die Risotto Anschmutzung wurde wie folgt hergestellt:
150 g Risotto-Reis
90 ml Gemüsebrühe
30 g Zwiebel
20 g Butter
60 g Parmesan

Die Zwiebeln wurde ohne Schale in die Rührschüssel geben und 10 s bei 10000 U/min zerkleinert. Butter wurde hinzugeben und die Zwiebeln über 3 Min./120°C/100 U/min gedünstet. Den Reis wurde hinzugefügt und alles weitere 3 Min./120°C/100 U/min gedünstet. Gemüsebrühe wurde zugeben und der Reis 15 Min./100°C/100 U/min gegart. Der zerkleinerte Parmesan wurde zugegeben und für 1 Min./100°C/100 U/min untergerührt.

Anschließend wurde die Mischung weitere 2 min. bei 90°C und 100 U/min in der Rührschüssel belassen, wodurch sich die Verschmutzung weiter ansetzte.

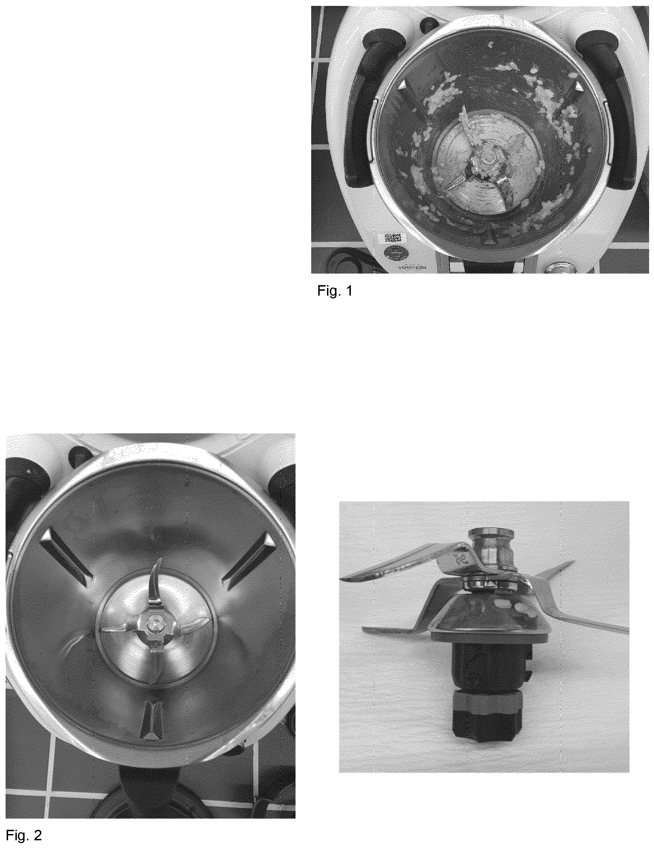

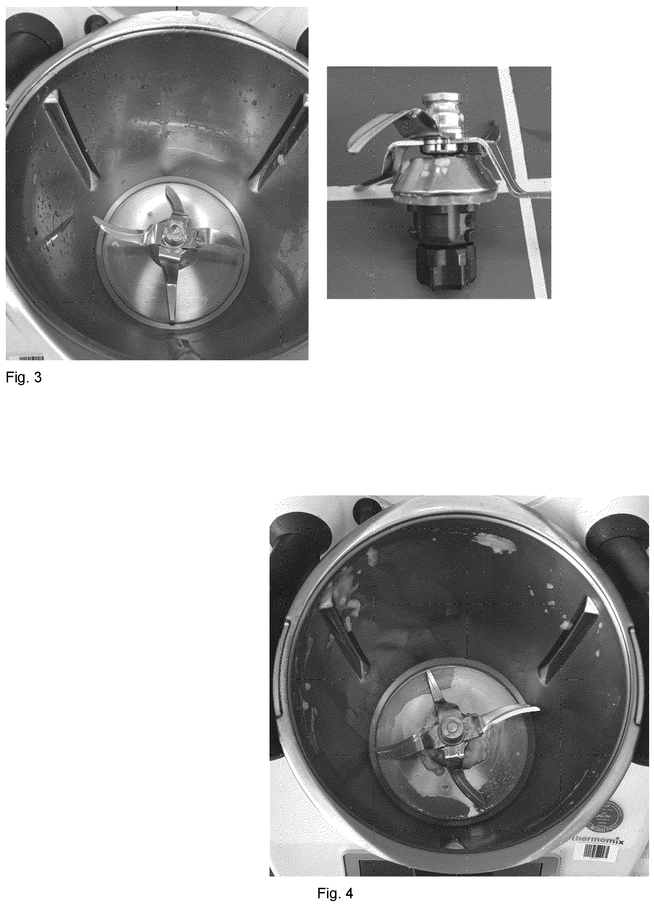

Das Risotto wurde direkt aus der Rührschüssel mit einem Schaber grob entfernt und die verbliebenen Reste trockneten anschließend 2 h bei Raumtemperatur an. Figur 1 zeigt ein Bild einer entsprechend angeschmutzten Rührschüssel.

Anschließend wurde das erfindungsgemäße Reinigungsverfahren mit einem handelsüblichen Geschirrspülmittel durchgeführt. Nach dem Reinigungsverfahren wurde die Spüllösung in den Abguss geschüttet und die Rührschüssel einmal mit Leitungswasser abgespült ohne Verschmutzungen hierdurch aktiv zu entfernen. Die Verfahren sowie die damit erzielten Ergebnisse sind nachfolgend zusammengefasst:

### Reinigungsprogramm:

Variante 1: Dauer: 5 min. / Endtemperatur: 60°C
Variante 2: Dauer: 4 min. / Endtemperatur: 50°C
Variante 3: Dauer: 5 min. / Endtemperatur: 65°C (Vergleichsbeispiel)

**Tabelle 1:**

| Variante 1 | | Variante 2 | | Variante 3 (Vgl) | |
|---|---|---|---|---|---|
| Drehgeschwindigkeit | Dauer | Drehgeschwindigkeit | Dauer | Drehgeschwindigkeit | Dauer |
| 1000 U/min | 105 s | 3000 U/min | 60 s | 350 U/min | 300 s |
| 3000 U/min | 45 s | 350 U/min | 120 s | | |
| 350 U/min | 60 s | 3000 U/min | 90 s | | |
| 150 U/min | 60 s | | | | |
| 4500 U/min | 30 s | | | | |

### Vergleich der Reinigungsleistung:

| | |
|---|---|
| Variante 1: | Eine nach Variante 1 gereinigte Rührschüssel sowie das zugehörige Rührwerk sind in Fig. 2 gezeigt. Links ist ein Bild der Rührschüssel, rechts ein Bild des Rührwerkes, wobei das Rührwerk so entnommen wurde, dass keine eventuell vorhandene Anschmutzung entfernt wird. |
| | Die Rührschüssel war sauber, es waren nur minimale Reste an Verschmutzung am Schüsselboden und einzelne Reiskörner unter dem Messer (Rührwerk) zu erkennen. |
| Variante 2: | Eine nach Variante 2 gereinigte Rührschüssel sowie das zugehörige Rührwerk sind in Fig. 3 gezeigt. Links ist ein Bild der Rührschüssel, rechts ein Bild des Rührwerkes, wobei das Rührwerk so entnommen wurde, dass keine eventuell vorhandene Anschmutzung entfernt wird. |
| | Die Rührschüssel war sauber, es waren minimale Reste an Verschmutzung an Schüsselboden und Schüsselwand und einzelne Reiskörner unter dem Messer (Rührwerk) zu erkennen. |
| Variante 3: | Eine nach Variante 3 gereinigte Rührschüssel sowie das zugehörige Rührwerk sind in Fig. 4 gezeigt. |
| | Die Rührschüssel wies deutliche Rückstände an Risotto-Verunreinigung am Schüsselboden und -wänden sowie viele Reiskörner unter dem Messer (Rührwerk) auf. |

Mit dem erfindungsgemäßen Verfahren konnte somit eine rasche und gründliche Reinigung erzielt werden, ohne dass eine manuelle Reinigung (schrubben) notwendig war.

Bevorzugt werden in den erfindungsmäßen Reinigungsverfahren beispielsweise auch die folgenden Reinigungsmittel (Tabellen 2 und 3) eingesetzt, die eine überragende Reinigungsleistung in Kombination mit den genannten Reinigungsverfahren, aber insbesondere mit Variante 1 oder 2, insbesondere Variante 1 aufweisen.

**Tabelle 2: Formelbeispiel für ein erfindungsgemäßes Reinigungsmittel in fester Form**

| Aktivstoff(in Gew.-%, sofern nichts anderes angegeben) | |
|---|---|
| Etidronsäure | 4,5 |
| TAED | 4,5 |
| Natriumcarbonat | 34,0 |
| Natrium-Citrat | 10,0 |
| C16/C18 alcohol polyglycol ether | 11,0 |
| Natriumpercarbonat | 15,0 |
| MnTACN | 0,1 |
| Protease (aktives Enzymprotein) | 0,4 |
| Amylase (aktives Enzymprotein) | 0,2 |
| Hilfsstoffe | Add 100 |

Als Protease wurde eine Protease wie in WO 2017/215925 A1 offenbart eingesetzt. Als Amylase wurde Stainzyme^{™} Plus Evity 24 T (Novozymes) eingesetzt. Das Verhältnis Protease zu Amylase (bezogen jeweils auf die Menge an aktivem Enzymprotein) beträgt 2:1.

**Tabelle 3: Formelbeispiel für ein weiteres erfindungsgemäßes Reinigungsmittel**

| Aktivstoff | |
|---|---|
| (in Gew.-%, sofern nichts anderes angegeben) | |
| Etidronsäure | 4,5 |
| TAED | 4,5 |
| Natriumcarbonat | 34,0 |
| Natrium-Citrat | 10,0 |
| C16/C18 alcohol polyglycol ether | 11,0 |
| Natriumpercarbonat | 15,0 |
| MnTACN | 0,1 |
| Protease (aktives Enzymprotein) | 0,5 |
| Amylase (aktives Enzymprotein) | 0,25 |
| Hilfsstoffe | Add 100 |

Als Protease wurde Blaze Evity 125 T eingesetzt. Als Amylase wurde Excellenz S1000 eingesetzt.

## Patentansprüche

1. Verfahren zur Reinigung einer elektromotorisch betriebenen Küchenmaschine, welche eine Rührschüssel und ein Rührwerk im Inneren der Schüssel aufweist, **dadurch gekennzeichnet, dass** man die Rührschüssel mit einer Reinigungsflüssigkeit füllt, anschließend das Rührwerk sowie die Heizfunktion betätigt, wobei die Rührgeschwindigkeit des Rührwerks im Bereich von 50 U/min bis 11000 U/min liegt und mittels der Heizfunktion ein Energieeintrag von 100 bis 400 Wh erfolgt.

2. Verfahren nach Anspruch 1, **dadurch gekennzeichnet, dass** das Volumen der Reinigungsflüssigkeit zumindest 1/3 des Volumens der Rührschüssel entspricht.

3. Verfahren nach Anspruch 1 oder 2, **dadurch gekennzeichnet, dass** die Rührgeschwindigkeit des Rührwerks im Bereich von 100 U/min bis 5000 U/min liegt.

4. Verfahren nach zumindest einem der Ansprüche 1 bis 3, **dadurch gekennzeichnet, dass** der Energieeintrag so gewählt ist, dass die Heizrate zu einer Erwärmung der Reinigungsflüssigkeit von 1 bis 10 K/min, insbesondere von 6 bis 8 K/min führt.

5. Verfahren nach zumindest einem der Ansprüche 1 bis 4, **dadurch gekennzeichnet, dass** die maximale Temperatur der Reinigungsflüssigkeit während des Reinigungsverfahrens 80 °C, insbesondere 75 °C, vorzugsweise 70 °C beträgt.

6. Verfahren nach zumindest einem der Ansprüche 1 bis 5, **dadurch gekennzeichnet, dass** die Rührgeschwindigkeit des Rührwerks während des Reinigungsvorgangs wenigstens einmal, vorzugsweise wenigstens zweimal, insbesondere wenigstens dreimal geändert wird.

7. Verfahren nach Anspruch 6, **dadurch gekennzeichnet, dass** man die Rührgeschwindigkeit während des Reinigungsvorgangs wenigstens zweimal ändert, so dass 3 Reinigungs-Phasen unterschieden werden:
(i) zu Beginn des Reinigungsverfahrens liegt die Rührgeschwindigkeit im Bereich von 500 bis 11000 U/min, vorzugsweise von 750 bis 5000 U/min,
(ii) anschließend wird die Rührgeschwindigkeit auf einen Bereich von 50 bis 450 U/min, vorzugsweise von 100 bis 400 U/min, eingestellt,
(iii) abschließend wird die Rührgeschwindigkeit erneut auf einen Bereich von 500 bis 11000 U/min, vorzugsweise von 750 bis 5000 U/min eingestellt.

8. Verfahren nach Anspruch 7, **dadurch gekennzeichnet, dass** die erste (i) und dritte (iii) Phase jeweils über eine Dauer von 30 s bis 200 s durchgeführt werden und/oder die zweite Phase (ii) über eine Dauer von 50 s bis 200 s durchgeführt wird.

9. Verfahren nach Anspruch 7 oder 8, **dadurch gekennzeichnet, dass** während der Phase (i) und/oder während der Phase (ii) und/oder während der Phase (iii) die Rührgeschwindigkeit einmal, zweimal oder dreimal, insbesondere einmal oder zweimal geändert wird.

10. Verfahren nach mindestens einem der Ansprüche 1 bis 9, **dadurch gekennzeichnet, dass** nach Abschluss des Reinigungsvorgangs die Reinigungsflüssigkeit aus der Rührschüssel entfernt wird und die Rührschüssel und das Rührwerk im Anschluss mit klarem Wasser gespült werden.
